# EUROPEAN PATENT APPLICATION

(11) **EP 4 129 762 A1**
(43) Date of publication of application: **08.02.2023**
(21) Application number: 21781721.2
(22) Date of filing: 23.03.2021
(51) Int. Cl.: B60R 1/00, B60R 11/02, G03B 11/00, G03B 15/00, G02B 5/30, H04N 5/225

(54) **VEHICLE INTERIOR STRUCTURE**

(30) Priority: 02.04.2020 JP 2020066537
(71) Applicant: Nitto Denko Corporation, Ibaraki-shi, Osaka 567-8680 (JP)
(72) Inventor: TAKADA, Katsunori, Ibaraki-shi, Osaka 567-8680 (JP)
(74) Representative: Hoffmann Eitle
(86) International application number: PCT/JP2021/011923
(87) International publication number: WO 2021/200388

(57) **Abstract**

Provided is a vehicle interior structure including a windshield, an interior member, and a camera, in which an image of the reflection of the interior member on the windshield is hardly taken with the camera. The vehicle interior structure of the present invention includes; a windshield; an interior member arranged below the windshield; and a camera arranged behind the windshield. A polarizing plate is arranged between the windshield and the camera, and the polarizing plate is arranged so as to transmit a larger quantity of P-polarized light than that of S-polarized light.

## Description

### Technical Field

The present invention relates to a vehicle interior structure, and more specifically, to a vehicle interior structure including a windshield, an interior member, and a camera, in which an image of reflection of the interior member on the windshield is hardly taken with the camera.

### Background Art

A vehicle such as an automobile may be mounted with a camera for taking an image of the front of the vehicle through the windshield thereof (e.g., a camera for a dashboard camera, a camera for a driving support system, or a camera for a self-driving system) . Such camera may involve the occurrence of a problem in that an interior member (e.g., the upper surface of an instrument panel) is reflected on the windshield and the reflection inhibits the function of the camera. It is particularly important for each of a camera for driving support and a camera for self-driving to sufficiently and stably exhibit its performance without being affected by the reflection.

### Citation List

### Patent Literature

[PTL 1] JP 2014-084071 A

### Summary of Invention

### Technical Problem

The present invention has been made to solve the above-mentioned problem, and an object of the present invention is to provide a vehicle interior structure including a windshield, an interior member, and a camera, in which an image of the reflection of the interior member on the windshield is hardly taken with the camera.

### Solution to Problem

According to one embodiment of the present invention, there is provided a vehicle interior structure, including: a windshield; an interior member arranged below the windshield; and a camera arranged behind the windshield, wherein the vehicle interior structure further includes a polarizing plate arranged between the windshield and the camera, and wherein the polarizing plate is arranged so as to transmit a larger quantity of P-polarized light than that of S-polarized light.

In one embodiment, the interior member has a surface having an angle of from 20° to 120° with respect to the windshield.

### Advantageous Effects of Invention

According to the present invention, the vehicle interior structure including the windshield, the interior member, and the camera, in which an image of the reflection of the interior member on the windshield is hardly taken with the camera, can be provided.

### Brief Description of Drawings

FIG. **1** is a schematic view for illustrating a vehicle interior structure according to one embodiment of the present invention.
FIGS. **2** are photographic views for showing the contents of Reference Example.

### Description of Embodiments

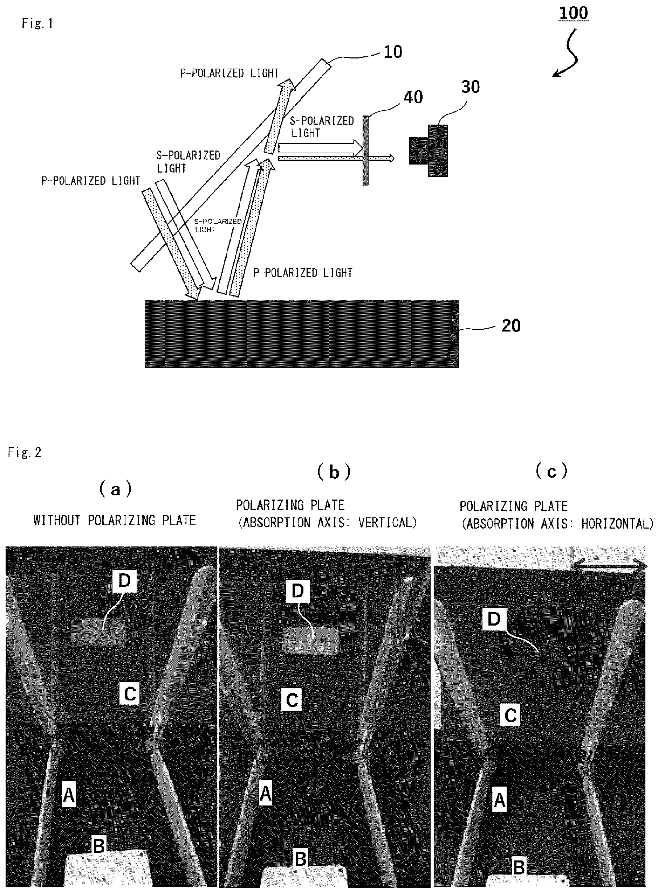

FIG. **1** is a schematic view for illustrating a vehicle interior structure according to one embodiment of the present invention. A vehicle interior structure **100** according to this embodiment includes: a windshield **10;** an interior member **20** arranged below the windshield **10;** and a camera **30** arranged behind the windshield **10.** The interior member **20** may be arranged at the position at which light that has passed through the windshield **10** arrives. In one embodiment, the interior structure **100** is configured so that at least part of the interior member **20** and the projection of the windshield **10** in a vertical direction may overlap each other. The camera **30** may be arranged at the position at which light, which has passed through the windshield **10,** has been reflected on the interior member **20,** and has been reflected on the windshield **10,** arrives.

A polarizing plate **40** is arranged between the windshield **10** and the camera **30.** In other words, the polarizing plate **40** is arranged so that the light, which has passed through the windshield **10,** has been reflected on the interior member **20,** and has been reflected on the windshield **10,** may pass through the polarizing plate **40** during its arrival from the windshield **10** at the camera **30** (substantially the lens of the camera).

The polarizing plate **40** is arranged so as to transmit a larger quantity of P-polarized light than that of S-polarized light.

According to the present invention, the vehicle interior structure is configured as described above, and hence an image of the reflection of the interior member on the windshield can be prevented from being taken with the camera. More specifically, while the reflectance of the P-polarized light on the windshield is low, the reflectance of the S-polarized light on the windshield is high, that is, the S-polarized light is responsible for the reflectance. However, when the S-polarized light is cut off with the polarizing plate, an image of the reflection of the interior member on the windshield can be prevented from being taken with the camera. With regard to light from the front of the windshield, the P-polarized light passes through the windshield and the polarizing plate to arrive at the camera, and hence an image of the front can be satisfactorily taken.

### (Interior Member)

As described above, the interior member is configured to reflect a larger quantity of P-polarized light than that of S-polarized light. In one embodiment, the interior member configured as described above has a polarizing function. Any appropriate material may be used as a material that expresses polarization, and examples thereof include: a polarizing plate; and a resin material having incorporated thereinto iodine, a dye, a liquid crystal, or the like.

The interior member preferably has a surface having an angle of from 20° to 120° with respect to the windshield, more preferably has a surface having an angle of from 30° to 90° with respect thereto, and still more preferably has a surface having an angle of from 40° to 70° with respect thereto. When the interior member and the windshield are arranged at such angle, light reflected on the interior member can be caused to enter the windshield at an angle close to Brewster's angle, and hence the reflection of P-polarized light on the windshield can be reduced. As a result, the quantity of the light passing through the polarizing plate further reduces, and hence the effect of the present invention becomes remarkable. When the interior member has a curved surface, an angle between the curved surface and the interior member is specified by the tangent plane of the curved surface.

The interior member may be, for example, an instrument panel, and may be a formed body formed of a low-density resin, such as polypropylene, foamed polypropylene, polyvinyl chloride, or acrylonitrile-styrene acrylate.

### (Polarizing Plate)

In one embodiment, the polarizing plate includes a polarizer. The polarizing plate typically further includes a protective film arranged on at least one side of the polarizer. The polarizer is not particularly limited, and may be an absorption type or a reflection type. In addition, the polarizing plate may include a material that can cause polarization, such as iodine, a dye, or a liquid crystal.

When the polarizing plate uses an absorption-type polarizer, the polarizing plate is preferably arranged so that the absorption axis of the polarizer may be horizontal, and when the polarizing plate uses a reflection-type polarizer, the polarizing plate is preferably arranged so that the reflection axis of the polarizer may be horizontal. In other words, the polarizing plate is preferably arranged so that a plane including the transmission axis of the polarizer and the normal of the polarizing plate, and the windshield may be substantially perpendicular to each other. Through such arrangement, S-polarized light can be effectively cut off, and hence the effect of the present invention becomes remarkable. The phrase "substantially perpendicular" is a concept including not only a case in which both the planes are strictly perpendicular to each other but also a case in which an angle formed by both the planes is 90°±10° (preferably 90°±5°).

The thickness of the polarizing plate is preferably from 5 µm to 300 µm, more preferably from 10 µm to 250 µm, still more preferably from 25 µm to 200 µm, particularly preferably from 25 µm to 100 µm.

The thickness of the polarizer is not particularly limited, and an appropriate thickness may be adopted depending on purposes. The thickness is typically from about 1 um to about 80 um.

The polarizer preferably exhibits absorption dichroism at any wavelength in the wavelength range of from 380 nm to 780 nm. The polarizer has a single layer transmittance of preferably 35% or more, more preferably 38% or more, still more preferably 40% or more, particularly preferably 42% or more. The polarizer has a polarization degree of preferably 90% or more, more preferably 92% or more, still more preferably 95% or more, particularly preferably 98% or more.

The polarizer is preferably an iodine-based polarizer. More specifically, the polarizer may be formed of an iodine-containing polyvinyl alcohol-based resin (hereinafter referred to as "PVA-based resin") film.

Any appropriate resin may be adopted as a PVA-based resin for forming the PVA-based resin film. Examples of the resin include polyvinyl alcohol and an ethylene-vinyl alcohol copolymer. The polyvinyl alcohol is obtained by saponifying polyvinyl acetate. The ethylene-vinyl alcohol copolymer is obtained by saponifying an ethylene-vinyl acetate copolymer. The saponification degree of the PVA-based resin is typically from 85 mol% to 100 mol%, preferably from 95.0 mol% to 99.95 mol%, more preferably from 99.0 mol% to 99.93 mol%. The saponification degree may be determined in conformity with JIS K 6726-1994. The use of the PVA-based resin having such saponification degree can provide a polarizer excellent in durability. When the saponification degree is excessively high, gelling may occur.

The average polymerization degree of the PVA-based resin may be appropriately selected depending on purposes. The average polymerization degree is typically from 1,000 to 10,000, preferably from 1,200 to 5,000, more preferably from 1,500 to 4,500. The average polymerization degree may be determined in conformity with JIS K 6726-1994.

A method of obtaining the polarizer from the PVA-based resin film is generally a method of producing the polarizer through a series of treatment processes including swelling, dyeing, cross-linking, stretching, water washing, and drying. At this time, the order of the respective treatments, that is, the swelling, the dyeing, the cross-linking, the stretching, the water washing, and the drying in each treatment process, the number of times of each of the treatments, and whether or not each of the treatments is performed are not particularly limited, and some of the treatments may be simultaneously performed in one treatment process, or some of the treatments may not be performed. For example, the stretching treatment may be performed after the dyeing treatment, or may be performed simultaneously with, for example, the swelling treatment and the dyeing treatment. In addition, the dyeing treatment may be performed after the stretching treatment has been performed. Further, a method including performing the cross-linking treatment before or after the stretching treatment is used. In addition, a method of producing the polarizer is not limited to the above-mentioned production method, and the polarizer may be produced by using any other production method. For example, a dry stretching method may be used, or a polarizer, which is obtained by kneading a dichroic substance into a polymer film made of polyethylene terephthalate (PET) or the like, forming the kneaded product into a film, and stretching the film, is permitted. Alternatively, for example, an O-type polarizer obtained by incorporating, into a liquid crystal aligned in a uniaxial direction, which serves as a host, a dichroic dye serving as a guest (US 5523863 A or JP 03-503322 A), or an E-type polarizer using a dichroic lyotropic liquid crystal (US 6049428 A) is permitted.

Any appropriate resin film may be adopted as the protective film. A material for forming the protective film is, for example, a polyester-based resin such as polyethylene terephthalate (PET), a cellulose-based resin such as triacetylcellulose (TAC), a cycloolefin-based resin such as a norbornene-based resin, an olefin-based resin, such as polyethylene or polypropylene, or a (meth)acrylic resin. Of those, polyethylene terephthalate (PET) is preferred. The term " (meth) acrylic resin" refers to an acrylic resin and/or a methacrylic resin.

The protective film and the polarizer are laminated via any appropriate adhesive layer.

The thickness of the protective film is preferably from 4 um to 250 um, more preferably from 5 um to 150 um, still more preferably from 10 µm to 100 µm, particularly preferably from 10 µm to 50 µm.

### (Camera)

Any appropriate camera may be used as the camera. The camera may be, for example, a camera for a dashboard camera, a camera for a driving support system, or a camera for a self-driving system.

### Examples

The present invention is specifically described below by way of Example (Reference Example), but the present invention is not limited to Example (Reference Example).

### [Reference Example]

As shown in FIG. **2(a)****,** a light-colored object B was arranged on a black desk A, and the desk and the object were regarded as an interior member. In addition, a glass plate C regarded as a windshield was arranged above the desk A having arranged thereon the light-colored object B so that an angle formed by the desk A and the glass plate C became 60°. Further, a red object D was arranged on the front of the glass plate C opposite to the desk A. Then, an image of the red object D was taken with a camera from the rear of the glass plate. FIG. **2(a)** (and FIGS. **2 (b)** and **2(c)**) are photographs taken with the camera. According to such configuration, an image of the reflection of the light-colored object B was taken.

In addition, in FIG. **2(b)****,** a polarizing plate was arranged between the camera and the glass plate C so that its absorption axis was parallel to a vertical direction, followed by taking of an image of the red object D. According even to such configuration, an image of the reflection of the light-colored object B was taken.

Meanwhile, in FIG. **2(c)****,** the polarizing plate was arranged between the camera and the glass plate C so that its absorption axis was parallel to a horizontal direction, followed by taking of an image of the red object D. According to such configuration, an image of the reflection of the light-colored object B was prevented from being taken.

### Reference Signs List

- **10**: windshield
- **20**: interior member
- **100**: vehicle interior structure

## Claims

1. A vehicle interior structure, comprising:
a windshield;
an interior member arranged below the windshield; and
a camera arranged behind the windshield,
wherein the vehicle interior structure further comprises a polarizing plate arranged between the windshield and the camera, and
wherein the polarizing plate is arranged so as to transmit a larger quantity of P-polarized light than that of S-polarized light.

2. The vehicle interior structure according to claim 1, wherein the interior member has a surface having an angle of from 20° to 120° with respect to the windshield.
